# EUROPÄISCHE PATENTANMELDUNG

(11) **EP 2 674 785 A2**
(43) Veröffentlichungstag der Anmeldung: **18.12.2013**
(21) Anmeldenummer: 13167516.7
(22) Anmeldetag: 13.05.2013
(51) Int. Cl.: G01S 19/41, G01S 5/00

(54) **Verfahren und Vorrichtung zur Bestimmung der Position eines Fahrzeuges**

(30) Priorität: 13.06.2012 DE 102012209873
(71) Anmelder: Siemens Aktiengesellschaft, 80333 München (DE)
(72) Erfinder: Schmid, Reiner, Dr., 80538 München (DE)

(57) **Zusammenfassung**

Die vorliegende Erfindung beschreibt ein Verfahren zur Bestimmung einer Position eines Fahrzeuges (30), wobei das Verfahren folgende Verfahrensschritte aufweist: Bereitstellen (S1) von ersten Positions-Rohdaten (PD3) eines Navigationssatellitensystems (20) des Fahrzeuges (30); Identifizieren (S2) von mindestens einem weiteren Fahrzeug (40, 50) und Einrichten einer Kommunikationsverbindung (42, 52) mit dem identifizierten mindestens einen weiteren Fahrzeug (40, 50); Empfangen (S3) von zweiten Positions-Rohdaten (PD4, PD5) des Navigationssatellitensystems (20) des mindestens eines weiteren Fahrzeuges (40, 50) über die eingerichtete Kommunikationsverbindung (42, 52); und Ermitteln (S4) der Position des Fahrzeuges (30) mittels einer differentiellen Positionsbestimmung basierend auf den empfangenen zweiten Positions-Rohdaten (PD4, PD5) des mindestens einen weiteren Fahrzeuges und auf den bereitgestellten ersten Positions-Rohdaten (PD3) des Fahrzeuges (30).

## Beschreibung

### Technisches Gebiet

Die vorliegende Erfindung betrifft ein Verfahren und eine Vorrichtung zur Bestimmung der Position eines Fahrzeuges.

### Stand der Technik

Moderne Automobile sind in zunehmendem Maße mit Kommunikationsmitteln ausgestattet, die einen Datenaustausch zwischen Automobilen während der Fahrt ermöglichen, sogenannte Car2Car-Kommunikation.

Mit Car-to-Car Communication - im englischen Sprachraum unter Vehicle-to-Vehicle geläufig, kurz V2V - bezeichnet man den Austausch von Informationen und Daten zwischen Kraftfahrzeugen mit dem Hintergrund, dem Fahrer frühzeitig kritische und gefährliche Situationen zu melden. Hierzu gibt es verschiedene Projekte in Europa, die die Erhöhung der Sicherheit im Verkehr sowie die Optimierung des Verkehrsflusses anstreben.

Dabei können beispielsweise Daten über Geschwindigkeit, Fahrtrichtung, Fahrziel, aber auch über den Streckenzustand und die Verkehrssituation übermittelt werden.

Damit das empfangende Fahrzeug eine möglichst sinnvolle Auswertung vornehmen kann, setzt das die genaue Bestimmung wenigstens der relativen Position des sendenden Fahrzeugs zum Empfänger voraus. Mit den gängigen Methoden zur Positionsbestimmung, etwa Global Positioning System, kurz GPS, offiziell NAVSTAR GPS, ein globales Navigationssatellitensystem zur Positionsbestimmung, kann diese jedoch oft nicht genau genug, das heißt mit einer Genauigkeit im Zentimeterbereich ermittelt werden.

Ist diese jedoch gewährleistet, dann können die übermittelten Daten wesentlich besser in Hinblick auf die vorliegende Verkehrssituation bewertet werden. Weiterhin ist die Zuordnung zwischen Senderdaten und Senderposition erforderlich, die auch bei hoher Fahrzeugdichte gewährleistet sein muss.

Es ist daher eine Aufgabe der vorliegenden Erfindung, eine Kombination der Car-2-Car Kommunikation mit den rohen, nicht verarbeiteten GPS-Empfängerrohdaten bereitzustellen, um eine infrastrukturlose exakte Bestimmung der relativen Position der Fahrzeuge untereinander zu ermöglichen.

Diese Aufgabe wird erfindungsgemäß durch ein Verfahren zur Bestimmung der Position eines Fahrzeuges gemäß dem Patentanspruch 1 und eine entsprechende Vorrichtung mit den Merkmalen des Patentanspruchs 10 gelöst.

Die Erfindung betrifft ein Verfahren zur Bestimmung einer Position eines Fahrzeuges, wobei das Verfahren folgende Verfahrensschritte aufweist: Bereitstellen von ersten Positions-Rohdaten eines Navigationssatellitensystems des Fahrzeuges; Identifizieren von mindestens einem weiteren Fahrzeug und Einrichten einer Kommunikationsverbindung mit dem identifizierten mindestens einen weiteren Fahrzeug; Empfangen von zweiten Positions-Rohdaten des Navigationssatellitensystems des mindestens eines weiteren Fahrzeuges über die eingerichtete Kommunikationsverbindung; und Ermitteln der Position des Fahrzeuges mittels einer differentiellen Positionsbestimmung basierend auf den empfangenen Positions-Rohdaten des mindestens einen weiteren Fahrzeuges und auf den bereitgestellten Positions-Rohdaten des Fahrzeuges.

Gemäß einem weiteren Aspekt liefert die vorliegende Erfindung eine Vorrichtung zur Bestimmung einer Position eines Fahrzeuges, mit einer Datenspeichereinrichtung, welche dazu ausgelegt ist, Positions-Rohdaten eines Navigationssatellitensystems des Fahrzeuges bereitzustellen; einer Bildsensoreinrichtung, welche dazu ausgelegt ist, mindestens ein weiteres Fahrzeug zu identifizieren; einer Kommunikationseinrichtung, welche dazu ausgelegt ist, das mindestens eine weitere Fahrzeug zu identifizieren und eine Kommunikationsverbindung mit dem identifizierten mindestens einen weiteren Fahrzeug einzurichten und Rohdaten des Navigationssatellitensystems des mindestens eines weiteren Fahrzeuges über die eingerichtete Kommunikationsverbindung zu empfangen; und einer Recheneinrichtung, welche dazu ausgelegt ist, die Position des Fahrzeuges mittels einer differentiellen Positionsbestimmung basierend auf den empfangenen Rohdaten des mindestens einen weiteren Fahrzeuges und auf den bereitgestellten Rohdaten des Fahrzeuges zu ermitteln.

Die der vorliegenden Erfindung zu Grunde liegende Erkenntnis besteht darin, dass erst durch eine Kombination der Car-2-Car Kommunikation mit den rohen, nicht verarbeiteten GPS-Empfängerdaten Daten über die vorherrschende Verkehrssituation, Hindernisse und dergleichen in vollem Umfang genutzt werden können.

Die der vorliegenden Erfindung zu Grunde liegende Idee besteht nun darin, dass Informationen, die über Car2Car Kommunikation ausgetauscht werden, mittels des angegebenen Verfahrens hinsichtlich Ihrer Bedeutung für das empfangende Fahrzeug besser bewertet werden können.

Dazu sieht die vorliegende Erfindung vor, eine Information über eine Behinderung auf einer Fahrspur, die ein nahes Auto sendet, dahingehend zu beurteilen, ob sie die gleiche Fahrspur betrifft, wie die das empfangenden Autos, und auch ob das empfangende Auto diese Gefahrenstelle möglicherweise gar nicht betrifft, da es diese bereits hinter sich gelassen hat.

Die relative Positionierung erlaubt die sachgemäße Interpretation von Informationen, die über Car2Car Kommunikation ausgetauscht werden. Diese Informationen können dadurch hinsichtlich Ihrer Bedeutung für das empfangende Fahrzeug ausgewertet werden.

Die Identifikation des Senders beispielsweise durch Auswertung eines durch die Bildsensoreinrichtung aufgezeichneten Videobilds ermöglicht den Bezug der Car2Car Kommunikation mit einer sonstigen vom empfangenden Fahrzeug gewinnbaren Information und erlaubt den Einbezug in die Beurteilung der Fahrsituation.

Die vorliegende Erfindung sieht ferner vor, eine Warninformation über ein Hindernis von einem fremden Fahrzeug in Bezug zu setzen mit dem durch die Bildsensoreinrichtung wahrgenommen Verhalten des fremden Fahrzeuges, wie etwa einem erkennbaren Ausweich- oder Bremsverhalten. Zudem kann die Umgebung in Form eines Umgebungsmodells berücksichtigt werden, und so auf möglichen Verhaltensweisen geschlossen werden, was die Analyse der Bedeutung für das empfangende Fahrzeug vereinfacht.

Vorteilhafte Ausführungsformen und Weiterbildungen ergeben sich aus den Unteransprüchen sowie aus der Beschreibung unter Bezugnahme auf die Figuren.

Bei einer möglichen Ausführungsform des erfindungsgemäßen Verfahrens ist vorgesehen, dass das Bestimmen der Position des Fahrzeuges ferner ein Erzeugen eines Umgebungsmodells umfasst, welches eine ermittelte Position des Fahrzeuges und eine ermittelte Position des mindestens einen weiteren Fahrzeuges aufweist.

Bei einer weiteren möglichen Ausführungsform des erfindungsgemäßen Verfahrens ist vorgesehen, dass das Umgebungsmodell durch eine auf Bilddaten einer Bildsensoreinrichtung basierende Positionsbestimmung des Fahrzeuges erzeugt wird.

Bei einer weiteren möglichen Ausführungsform des erfindungsgemäßen Verfahrens ist vorgesehen, dass die auf Bilddaten der Bildsensoreinrichtung basierende Positionsbestimmung des Fahrzeuges durch eine stereometrische Positionsbestimmung vorgenommen wird.

Bei einer weiteren möglichen Ausführungsform des erfindungsgemäßen Verfahrens ist vorgesehen, dass das Bestimmen der Position des Fahrzeuges durch ein Abgleichen der Position des Fahrzeuges mit dem erzeugten Umgebungsmodell vorgenommen wird.

Bei einer weiteren möglichen Ausführungsform des erfindungsgemäßen Verfahrens ist vorgesehen, dass das Umgebungsmodell eine Einbeziehung von Karteninformationen umfasst.

Bei einer weiteren möglichen Ausführungsform der erfindungsgemäßen Vorrichtung ist vorgesehen, dass als die einbezogenen Karteninformationen Informationen über einen vom Fahrzeug abgefahrenen Streckenverlauf und/oder über mittels Bilderkennung identifizierte Verkehrszeichen verwendet werden.

Bei einer weiteren möglichen Ausführungsform der erfindungsgemäßen Vorrichtung ist vorgesehen, dass das Umgebungsmodell durch Daten von fahrzeugexternen Verkehrsbeobachtungseinrichtungen erzeugt wird.

Bei einer weiteren möglichen Ausführungsform der erfindungsgemäßen Vorrichtung ist vorgesehen, dass das Umgebungsmodell eine Warninformation des mindestens einen weiteren Fahrzeuges umfasst.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNGEN

Die vorliegende Erfindung wird nachfolgend anhand der in den schematischen Figuren der Zeichnungen angegebenen Ausführungsbeispiele näher erläutert.

Es zeigen dabei:
- Fig. 1: eine schematische Darstellung einer Verkehrssituation mit drei Fahrzeugen gemäß einer möglichen Ausführungsform des erfindungsgemäßen Verfahrens;
- Fig. 2: ein schematisches Blockdiagramm für das Erzeugen eines Umgebungsmodells zur Bestimmung der Position eines Fahrzeuges gemäß einer möglichen Ausführungsform des erfindungsgemäßen Verfahrens;
- Fig. 3: ein Diagramm einer Vorrichtung zur Bestimmung der Position eines Fahrzeuges gemäß einer möglichen Ausführungsform der erfindungsgemäßen Vorrichtung; und
- Fig. 4: ein Ablaufdiagramm eines Verfahrens zur Bestimmung der Position eines Fahrzeuges gemäß einer möglichen Ausführungsform des erfindungsgemäßen Verfahrens.

In allen Figuren sind gleiche oder funktionsgleiche Elemente und Vorrichtungen - sofern nichts anderes angegeben ist - mit denselben Bezugszeichen versehen worden.

### BESCHREIBUNG VON AUSFÜHRUNGSBEISPIELEN

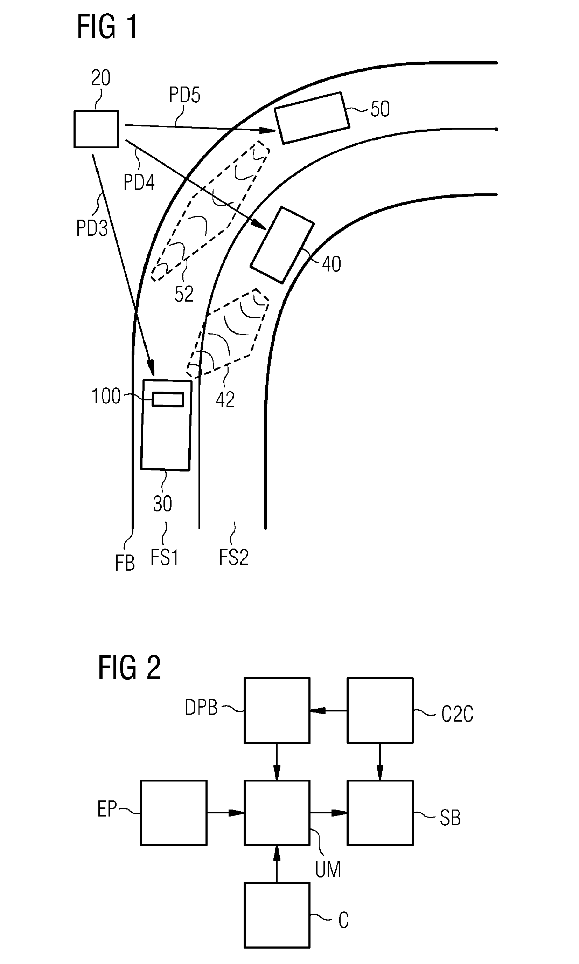

Die Figur 1 zeigt eine schematische Darstellung einer Verkehrssituation mit drei Fahrzeugen gemäß einer möglichen Ausführungsform des erfindungsgemäßen Verfahrens.

Eine Fahrbahn FB umfasst einen ersten Fahrstreifen FS1 und einen zweiten Fahrstreifen FS2. Auf dem ersten Fahrstreifen befinden ein Fahrzeug 30 und ein weiteres Fahrzeug 40, auf dem zweiten Fahrstreifen befindet sich ein weiteres Fahrzeug 50.

Das Fahrzeug 30 kann beispielsweise über eine Kommunikationseinrichtung 106 einer Vorrichtung 100 Kommunikationsverbindungen 42, 52 mit den weiteren Fahrzeugen 40, 50 aufbauen.

Über die Kommunikationsverbindungen 42, 52 kann das Fahrzeug 30 zweiten Positions-Rohdaten PD4, PD5 des Navigationssatellitensystems 20 empfangen, welche zur Positionsbestimmung der weiteren Fahrzeuge 40, 50 vorgesehen sind.

Erste Positions-Rohdaten PD3 des Navigationssatellitensystems 20 des Fahrzeuges 30 werden beispielsweise von dem Navigationssatellitensystem 20 an das Fahrzeug 30 übermittelt.

Die Figur 2 zeigt ein schematisches Blockdiagramm für das Erzeugen eines Umgebungsmodells zur Bestimmung der Position eines Fahrzeuges gemäß einer möglichen Ausführungsform des erfindungsgemäßen Verfahrens.

Ein Umgebungsmodell UM verarbeitet dabei absolute Positionsdaten EP zu einer eigenen Position und relative Positionsdaten RPB zu einer relativen Positionsbestimmung.

Die relativen Positionsdaten RPB zu der relativen Positionsbestimmung können beispielsweise auf übermittelten Empfangsdaten C2CI basieren, welche über die Kommunikationsverbindungen 42, 52 von dem Fahrzeug 30 empfangen worden sind.

Ferner werden zum Erzeugen des Umgebungsmodell UM Kartendaten C durch eine Recheneinrichtung 108 des Fahrzeuges 30 verarbeitet.

Aus dem Umgebungsmodell UM und den übermittelten Empfangsdaten C2CI berechnet die Recheneinrichtung 108 des Fahrzeuges 30 ferner eine Situationsbewertung SB für das Fahrzeug 30 und dessen Umgebung.

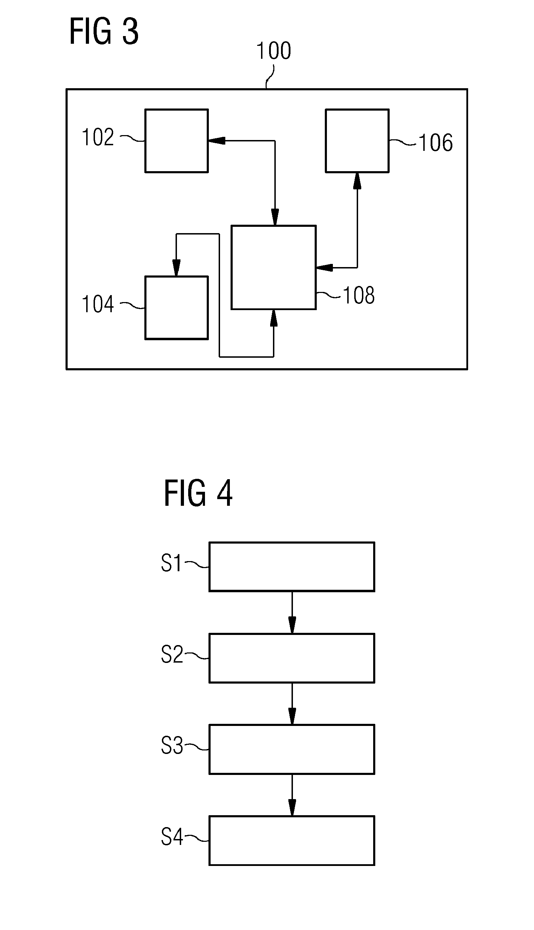

Die Figur 3 zeigt ein Diagramm einer Vorrichtung zur Bestimmung der Position eines Fahrzeuges gemäß einer möglichen Ausführungsform der erfindungsgemäßen Vorrichtung.

Eine Vorrichtung 100 zur Bestimmung einer Position eines Fahrzeuges umfasst eine Datenspeichereinrichtung 102, eine Bildsensoreinrichtung 104, eine Kommunikationseinrichtung 106 und eine Recheneinrichtung 108.

Die Datenspeichereinrichtung 102 ist dazu ausgelegt, Positions-Rohdaten PD3 eines Navigationssatellitensystems 20 des Fahrzeuges 30 bereitzustellen.

Die Bildsensoreinrichtung 104 ist dazu ausgelegt, mindestens ein weiteres Fahrzeug 40, 50 in der Umgebung des Fahrzeuges 30 zu identifizieren.

Die Kommunikationseinrichtung 106 ist dazu ausgelegt ist, eine Kommunikationsverbindung 42, 52 mit dem identifizierten mindestens einen weiteren Fahrzeug 40, 50 einzurichten und Rohdaten des Navigationssatellitensystems 20 des mindestens eines weiteren Fahrzeuges 40,50 über die eingerichteten Kommunikationsverbindung 42, 52 zu empfangen.

Die Recheneinrichtung 108 ist dazu ausgelegt, die Position des Fahrzeuges 30 mittels einer differentiellen Positionsbestimmung basierend auf den empfangenen Rohdaten des mindestens einen weiteren Fahrzeuges 40, 50 und auf den bereitgestellten ersten Positions-Rohdaten PD3 des Fahrzeuges 30 zu ermitteln.

Die Figur 4 zeigt ein Ablaufdiagramm eines Verfahrens zur Bestimmung der Position eines Fahrzeuges gemäß einer möglichen Ausführungsform des erfindungsgemäßen Verfahrens.

In einem ersten Schritt erfolgt ein Bereitstellen S1 von ersten Positions-Rohdaten PD3 eines Navigationssatellitensystems 20 des Fahrzeuges 30.

In einem zweiten Schritt erfolgt ein Identifizieren S2 von mindestens einem weiteren Fahrzeug 40, 50 und Einrichten einer Kommunikationsverbindung 42, 52 mit dem identifizierten mindestens einen weiteren Fahrzeug 40, 50.

In einem dritten Schritt erfolgt ein Empfangen S3 von zweiten Positions-Rohdaten PD4, PD5 des Navigationssatellitensystems 20 des mindestens eines weiteren Fahrzeuges 40, 50 über die eingerichtete Kommunikationsverbindung 42, 52.

In einem vierten Schritt erfolgt ein Ermitteln S4 der Position des Fahrzeuges 30 mittels einer differentiellen Positionsbestimmung basierend auf den empfangenen Positions-Rohdaten PD4, PD5 des mindestens einen weiteren Fahrzeuges und auf den bereitgestellten Positions-Rohdaten PD3 des Fahrzeuges.

Dabei können bei einer differentiellen Positionsbestimmung aus den Positions-Rohdaten der weiteren Fahrzeuge 40, 50 mit bekannter Position Korrekturen für die Messgrößen der Position des Fahrzeuges 30 zu den einzelnen Satelliten abgeleitet werden, um die darin enthaltenen, systematisch wirkenden Fehler zu reduzieren. Für einen Nutzer ist somit die Verfügbarkeit der Korrekturdaten losgelöst von der Referenzstation des eigenen Fahrzeuges 30 wichtig, mit der er seine Position korrigieren kann.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

## Patentansprüche

1. Verfahren zur Bestimmung einer Position eines Fahrzeuges (30), wobei das Verfahren folgende Verfahrensschritte aufweist:
- Bereitstellen (S1) von ersten Positions-Rohdaten (PD3) eines Navigationssatellitensystems (20) des Fahrzeuges (30);
- Identifizieren (S2) von mindestens einem weiteren Fahrzeug (40, 50) und Einrichten einer Kommunikationsverbindung (42, 52) mit dem identifizierten mindestens einen weiteren Fahrzeug (40, 50);
- Empfangen (S3) von zweiten Positions-Rohdaten (PD4, PD5) des Navigationssatellitensystems (20) des mindestens eines weiteren Fahrzeuges (40, 50) über die eingerichtete Kommunikationsverbindung (42, 52); und
- Ermitteln (S4) der Position des Fahrzeuges (30) mittels einer differentiellen Positionsbestimmung basierend auf den empfangenen zweiten Positions-Rohdaten (PD4, PD5) des mindestens einen weiteren Fahrzeuges (40, 50) und auf den bereitgestellten ersten Positions-Rohdaten (PD3) des Fahrzeuges (30).

2. Verfahren nach Anspruch 1, wobei das Bestimmen (S4) der Position des Fahrzeuges (30) ferner ein Erzeugen eines Umgebungsmodells (UM) umfasst, welches eine ermittelte Position des Fahrzeuges (30) und eine ermittelte Position des mindestens einen weiteren Fahrzeuges (40, 50) aufweist.

3. Verfahren nach Anspruch 2, wobei das Umgebungsmodell (UM) durch eine auf Bilddaten einer Bildsensoreinrichtung (104) basierende Positionsbestimmung des Fahrzeuges (30) erzeugt wird.

4. Verfahren nach Anspruch 3, wobei die auf Bilddaten der Bildsensoreinrichtung (104) basierende Positionsbestimmung des Fahrzeuges (30) durch eine stereometrische Positionsbestimmung vorgenommen wird.

5. Verfahren nach einem der Ansprüche 2 bis 4, wobei das Bestimmen (S4) der Position des Fahrzeuges (30) durch ein Abgleichen der Position des Fahrzeuges (30) mit dem erzeugten Umgebungsmodell (UM) vorgenommen wird.

6. Verfahren nach einem der Ansprüche 2 bis 4, wobei das Umgebungsmodell (UM) eine Einbeziehung von Kartendaten (C) umfasst.

7. Verfahren nach Anspruch 6, wobei als die Kartendaten (C) Informationen über einen vom Fahrzeug (30) abgefahrenen Streckenverlauf und/oder über mittels Bilderkennung identifizierte Verkehrszeichen verwendet werden.

8. Verfahren nach einem der Ansprüche 2 bis 7, wobei das Umgebungsmodell (UM) durch Daten von fahrzeugexternen Verkehrsbeobachtungseinrichtungen erzeugt wird.

9. Verfahren nach einem der vorhergehenden Ansprüche, wobei das Umgebungsmodell (UM) eine Warninformation des mindestens einen weiteren Fahrzeuges (40, 50) umfasst.

10. Vorrichtung (100) zur Bestimmung einer Position eines Fahrzeuges, mit:
- einer Datenspeichereinrichtung (102), welche dazu ausgelegt ist, erste Positions-Rohdaten (PD3) eines Navigationssatellitensystems (20) des Fahrzeuges (30) bereitzustellen;
- einer Bildsensoreinrichtung (104), welche dazu ausgelegt ist, mindestens ein weiteres Fahrzeug (40, 50) zu identifizieren;
- einer Kommunikationseinrichtung (106), welche dazu ausgelegt ist, eine Kommunikationsverbindung (42, 52) mit dem identifizierten mindestens einen weiteren Fahrzeug (40, 50) einzurichten und zweite Positions-Rohdaten (PD4, PD5) des Navigationssatellitensystems (20) des mindestens eines weiteren Fahrzeuges (40, 50) über die eingerichtete Kommunikationsverbindung (42, 52) zu empfangen; und
- einer Recheneinrichtung (108), welche dazu ausgelegt ist, die Position des Fahrzeuges (30) mittels einer differentiellen Positionsbestimmung basierend auf den empfangenen zweiten Rohdaten (PD4, PD5) des mindestens einen weiteren Fahrzeuges (40,50 und auf den bereitgestellten ersten Rohdaten (PD3) des Fahrzeuges (30) zu ermitteln.
